# EUROPEAN PATENT APPLICATION

(11) **EP 3 173 671 A1**
(43) Date of publication of application: **31.05.2017**
(21) Application number: 15824904.5
(22) Date of filing: 23.07.2015
(51) Int. Cl.: F16J 15/34

(54) **MECHANICAL SEAL AND FLOATING RING**

(30) Priority: 25.07.2014 JP 2014151975
(71) Applicant: Eagle Industry Co., Ltd., Minato-ku Tokyo 105-8587 (JP); EagleBurgmann Japan Co., Ltd., Tokyo 105-8587 (JP)
(72) Inventor: YANAGISAWA, Takashi, Tokyo 105-8587 (JP); TAKAHASHI, Hidekazu, Tokyo 105-8587 (JP)
(74) Representative: TBK
(86) International application number: PCT/JP2015/071015
(87) International publication number: WO 2016/013628

(57) **Abstract**

The present invention improves sealing performance between a floating ring (130) and a rotating ring (110). A mechanical seal (100) that seals an annular gap between a rotating shaft (200) and a housing (300) includes: a rotating ring (110) which rotates with the rotating shaft (200); a stationary ring (120) which is fixed to the housing (300); and a floating ring (130) which is provided between the rotating ring (110) and the stationary ring (120) in an axial direction of the rotating shaft (200) and which has a sliding portion (131) that slides on the rotating ring (110), wherein the mechanical seal (100) seals a sealed fluid via the sliding portion (131) of the floating ring (130) that slides on a sliding portion (111) of the rotating ring (110), and the sliding portion (131) has a plurality of carbon fibers and silicon carbide provided between the plurality of carbon fibers.

## Description

### [TECHNICAL FIELD]

The present invention relates to a mechanical seal using a floating ring and to a floating ring.

### [BACKGROUND ART]

Conventionally, a configuration of a mechanical seal is known which has a floating ring (sealing ring) between a rotating ring that rotates with a rotating shaft and a stationary ring that is fixed to a housing (for example, Patent Literature 1). While the floating ring slides on the rotating ring at one end surface in an axial direction of the rotating shaft and comes into contact with the stationary ring at the other end surface, the floating ring is not fixed to either member. Therefore, the floating ring has a gap in the axial direction of the rotating shaft between the rotating ring and the stationary ring and moves in the axial direction relative to the rotating ring and the stationary ring. Due to such a movement in the axial direction, a liquid film formed by a sealed fluid at gaps between the floating ring, the rotating ring, and the stationary ring is compressed and pressure is generated due to a squeeze effect (a wedge action). Since a pressing surface opens when the generated pressure is large, an amount of squashed liquid film must be reduced to reduce an area of the pressing surface. However, when the area of the pressing surface is reduced and a soft material with a small Young's modulus is used as a material of a sliding portion of the floating ring which slides on the rotating ring, then deformation is more likely to occur, and therefore, when high pressure is applied to the floating ring, the rotating ring, and the stationary ring, excessive deformation may cause fluid leakage and insufficient strength may cause deformation to the point where damage is incurred.

In consideration thereof, silicon carbide (SiC) with a high Young's modulus may conceivably be used as a material of the sliding portion of the floating ring. However, with silicon carbide, a self-lubricating property of the material itself is low. In addition, a small sliding surface width makes it difficult to form a fluid reservoir on a surface thereof and, furthermore, in a case where a material of the rotating ring that is the counterpart of the sliding movement is also silicon carbide or the like, seizure is likely to occur.

### [CITATION LIST]

### [PATENT LITERATURE]

Patent Literature 1: Japanese Patent Application Laid-open No. 2004-293766

### [SUMMARY OF INVENTION]

### [TECHNICAL PROBLEM]

In consideration thereof, it is an object of the present invention to improve sealing performance between a floating ring and a rotating ring in a mechanical seal using a floating ring.

### [SOLUTION TO PROBLEM]

In order to solve the problem described above, the present invention adopts the following means.

Specifically, a mechanical seal according to the present invention is
a mechanical seal that seals an annular gap between a rotating shaft and a housing, the mechanical seal including:
a rotating ring which rotates with the rotating shaft;
a stationary ring which is fixed to the housing; and
a floating ring which is provided between the rotating ring and the stationary ring in an axial direction of the rotating shaft and which has a sliding portion that slides on the rotating ring,
wherein the mechanical seal seals a sealed fluid via the sliding portion, and
the sliding portion has a plurality of carbon fibers and silicon carbide provided between the plurality of carbon fibers.

In addition, a floating ring according to the present invention is
a floating ring used in a mechanical seal that seals an annular gap between a rotating shaft and a housing, the floating ring being provided between a rotating ring which rotates with the rotating shaft and a stationary ring which is fixed to the housing in an axial direction of the rotating shaft and having a sliding portion that slides on the rotating ring,
wherein the floating ring seals a sealed fluid via the sliding portion, and
the sliding portion has a plurality of carbon fibers and silicon carbide provided between the plurality of carbon fibers.

According to this configuration, when pressure is generated as a liquid film at contact sections between the rotating ring, the stationary ring, and the floating ring is squashed by a movement of the floating ring in the axial direction, then, due to the presence of carbon fibers having elasticity and silicon carbide which is present between the carbon fibers and which comes into contact with a surface of the counterpart upon receiving a load, the carbon fibers elastically deform to increase the number of sections that come into contact with the surface of the counterpart and, although an apparent area does not change, an actual contact area increases. In addition, since contact surface pressure at each of the sections is reduced as compared to other sliding materials with a same sliding surface width, seizure of sliding surfaces and damage due to such seizure can be prevented. Furthermore, since the carbon fibers themselves have favorable slidability, the carbon fibers in the sliding portion of the floating ring produces a superior effect it terms of sliding. Therefore, since favorable slidability as well as sufficient strength can be obtained, sealing performance between the floating ring and the rotating ring can be improved.

In addition, favorably, a carbon fiber bundle portion that is an assembly in which longitudinal directions of a plurality of carbon fibers are oriented in a substantially same direction is formed, and silicon carbide is formed between the carbon fibers included in the carbon fiber bundle portion. Due to the presence of the carbon fiber bundle portion that is a collection of a plurality of carbon fibers, a gap with a specific length is formed between the fibers and the gap functions as a fluid reservoir. In other words, even with a narrow sliding surface such as that for the floating ring, lubricity is improved by allowing the sealed fluid to flow in and out from the gap. In addition, due to the formation of silicon carbide in the gap between the carbon fibers of the carbon fiber bundle portion, a load receptacle is formed at a position near the carbon fibers and the carbon fibers are less likely to be subjected to a load.

Furthermore, favorably, non-fibrous carbon provided between one carbon fiber bundle portion and another carbon fiber bundle portion adjacent thereto is further provided. Due to the presence of the non-fibrous carbon between a carbon fiber bundle portion and an adjacent carbon fiber bundle portion, the non-fibrous carbon acts as a self-lubricating agent and slidability further improves. In addition, when performing a lapping process for forming the sliding portion, since hardness of the carbon fibers themselves or hardness of the silicon carbide inside the carbon fiber bundle portion is higher than hardness of the non-fibrous carbon, the lapping process causes, in relation to the sliding portion, the non-fibrous carbon to become lower than the carbon fiber bundle portion, and the lower portion also functions as a fluid reservoir to improve lubricity. Furthermore, since the non-fibrous carbon is at a low position, the silicon carbide provided between the carbon fibers come into contact with a surface of the counterpart at the sliding portion and an actual contact portion is readily increased.

In addition, favorably, the plurality of carbon fiber bundle portions formed in the sliding portion are randomly oriented. Due to the carbon fiber bundle portions being randomly oriented, even with a narrow sliding surface such as that for the floating ring, a pathway that acts as a leakage pathway is less likely to be formed in the sliding portion and a fluid readily pools between sliding portions.

Furthermore, favorably, silicon carbide is present at a ratio of 35% or higher and lower than 85% in the sliding portion. Setting an abundance ratio of silicon carbide at a prescribed value or higher enables a necessary amount of silicon carbide for supporting a contact force to be secured and enables load to be supported, and setting the abundance ratio of silicon carbide lower than a prescribed value enables fluid reservoirs formed by gaps between the carbon fibers to be secured and enables lubricity to be improved.

In addition, favorably, a portion, which slides on the sliding portion of the floating ring, in the rotating ring includes a plurality of carbon fibers and silicon carbide provided between the plurality of carbon fibers. By using the same material as that of the sliding portion of the floating ring for a sliding portion of the rotating ring, favorable slidability can be obtained and sealing performance between the floating ring and the rotating ring can be improved.

### [ADVANTAGEOUS EFFECTS OF INVENTION]

As described above, according to the present invention, sealing performance between a floating ring and a rotating ring can be improved in a mechanical seal using a floating ring.

### [BRIEF DESCRIPTION OF DRAWINGS]

Fig. 1 is a schematic sectional view showing an overall configuration of a mechanical seal.
Fig. 2 is a micrograph of a sliding portion.
Fig. 3 is an enlarged partial photograph of Fig. 2.
Fig. 4 shows micrographs of sliding portions in samples created in the present Example.

### [DESCRIPTION OF EMBODIMENTS]

Hereinafter, modes for implementing the present invention will be exemplarily described in detail based on embodiments thereof with reference to the drawings. However, the dimensions, materials, shapes, relative arrangements and so on of constituent parts described in the embodiments are not intended to limit the scope of the present invention to these alone in particular unless specifically described.

### (Present Example)

### <Configuration of mechanical seal according to present Example>

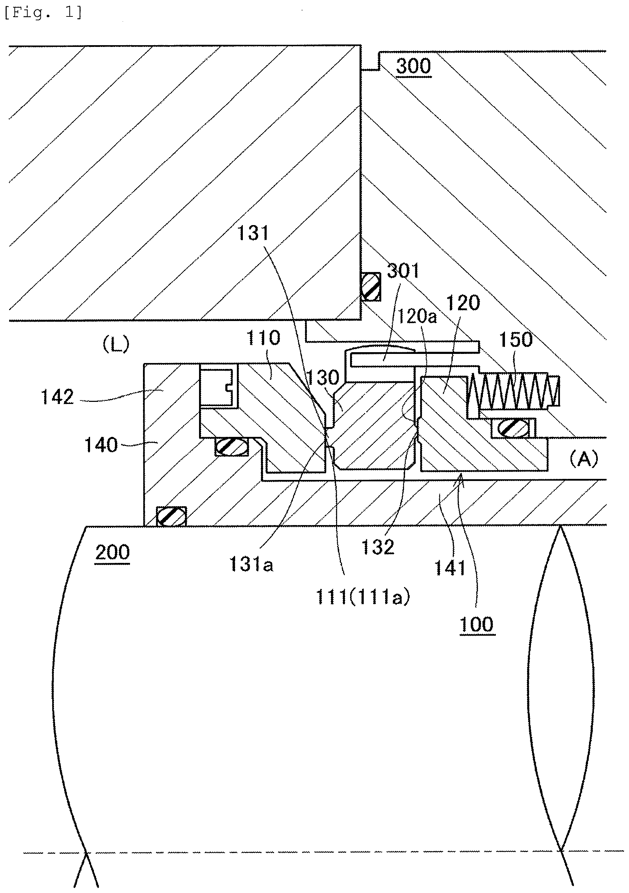

An overall configuration of a mechanical seal according to an Example of the present invention (hereinafter, referred to as the present Example) will be described with reference to Fig. 1. Fig. 1 is a schematic sectional view showing an overall configuration of a mechanical seal according to the present Example. While a single seal configuration using a single mechanical seal will be described in the present Example, the present invention may be applied to a double seal configuration using two mechanical seals. A mechanical seal is used to seal an annular gap between a rotating shaft and a housing.

As shown in Fig. 1, a mechanical seal 100 according to the present Example includes an annular rotating ring 110 which rotates with a rotating shaft 200, an annular stationary ring (static ring) 120 which is fixed to a housing 300, and an annular floating ring (sealing ring) 130 which is provided between the rotating ring 110 and the stationary ring 120. In addition, the mechanical seal 100 includes an annular sleeve 140 provided with a cylindrical portion 141 having an inner circumferential surface fixed to an outer circumferential surface of the rotating shaft 200 and a holding portion 142 which extends to an outer side in a radial direction of the rotating shaft 200 from the cylindrical portion 141 and which holds the rotating ring 110. Furthermore, the mechanical seal 100 includes a spring 150 as a biasing member which biases the stationary ring 120 with respect to the floating ring 130. The spring 150 is provided in plurality at equal intervals in a circumferential direction so that a uniform biasing force in the circumferential direction can be applied to the stationary ring 120 with respect to the floating ring 130. Fig. 1 is a sectional view of a section which is perpendicular to an axial direction of the rotating shaft 200 and which includes the spring 150.

The rotating ring 110 includes a sliding portion 111 which is one end in the axial direction of the rotating shaft 200 (hereinafter, also simply referred to as an axial direction) and which slides on the floating ring 130. Moreover, an end surface in the axial direction which comes into contact with the floating ring 130 in the sliding portion 111 will be referred to as a sliding surface 111a. The stationary ring 120 includes a pressing surface 120a which is one end surface in the axial direction and which comes into contact with and presses the floating ring 130.

The floating ring 130 is provided between the rotating ring 110 and the stationary ring 120 in the axial direction without being fixed to other members. In addition, the floating ring 130 includes a sliding portion 131 which slides on the sliding portion 111 of the rotating ring 110. The sliding portion 131 is a distal end of a portion that protrudes in the axial direction with respect to the rotating ring 110. Moreover, an end surface in the axial direction which comes into contact with the rotating ring 110 in the sliding portion 131 will be referred to as a sliding surface 131a. Furthermore, the floating ring 130 includes a pressed portion 132 which comes into contact with and is pressed by the pressing surface 120a of the stationary ring 120. The pressed portion 132 is a distal end of a portion that protrudes in the axial direction with respect to the stationary ring 120. Moreover, while the floating ring 130 slides on the rotating ring 110 which rotates with a rotation of the rotating shaft 200, movement of the floating ring 130 in a rotational direction of the rotating shaft 200 is restricted by a pin 301 as a rotation stopper which is provided so as to protrude from the housing 300.

In the present Example, a sealed fluid is sealed via the sliding portion 131 and the pressed portion 132 of the floating ring 130. In other words, as shown in Fig. 1, the inside of the housing 300 is divided into a fluid side L on which the sealed fluid is sealed and an atmosphere side (a non-fluid side) A. In the present Example, the fluid side L is an outer side in the radial direction of the rotating shaft 200 than the sliding portion 131 and the pressed portion 132 and the atmosphere side A is an inner side in the radial direction of the rotating shaft 200 than the sliding portion 131 and the pressed portion 132.

### <Material of sliding portion of floating ring>

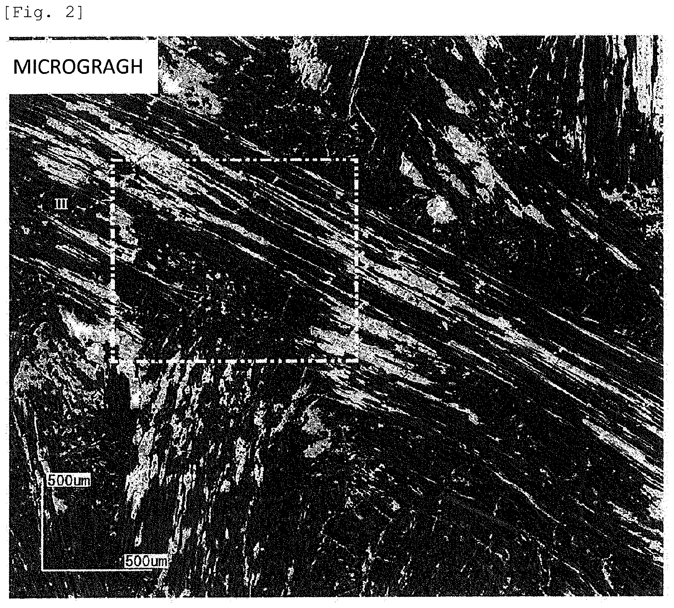

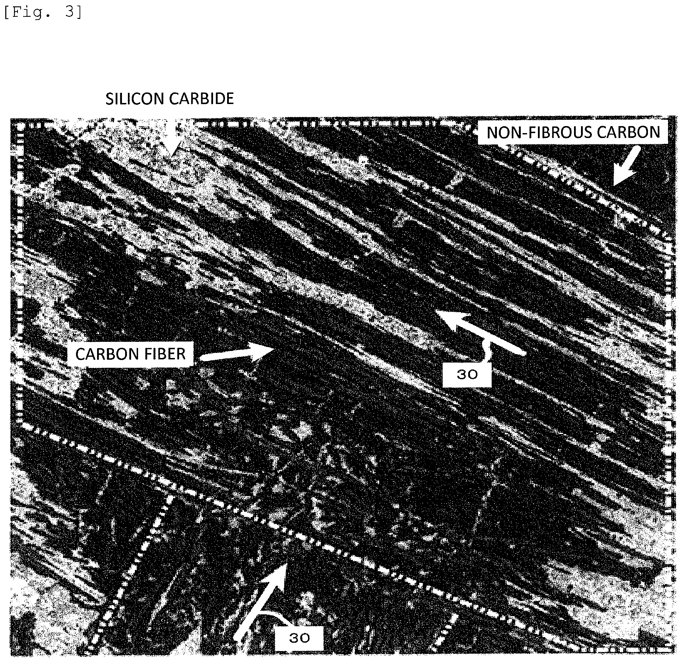

Next, a material of the sliding portion of the floating ring according to the present Example will be described with reference to Figs. 2 and 3. Fig. 2 is a micrograph of the sliding portion. Fig. 3 is an enlarged partial photograph of Fig. 2.

While the sliding portion 131 of the floating ring 130 according to the present Example is mainly constituted by carbon and silicon carbide, the sliding portion 131 may also include other substances such as silicon. As shown in Fig. 2, a SiC-C fiber-shaped structure derived from a carbon fiber structure used in a manufacturing process of the floating ring 130 is formed in the sliding portion 131 of the floating ring 130. In Fig. 2, the SiC-C fiber-shaped structure is observed as a streak-shaped structure extending in a fiber direction.

In Figs. 2 and 3, portions that appear in white are silicon carbide, portions that appear in gray are carbon fibers, and portions that appear in black between the carbon fibers are non-fibrous carbon. In addition, a portion forming an assembly in which a plurality of carbon fibers are oriented in a substantially same direction is a single carbon fiber bundle portion, and a carbon fiber bundle portion and streak-shaped silicon carbide present in the carbon fiber bundle portion constitute a SiC fiber-shaped structure. While non-fibrous carbon include non-fibrous carbon provided between one carbon fiber bundle portion and another carbon fiber bundle portion adjacent thereto, non-fibrous carbon provided between carbon fibers constituting one carbon fiber portion, and non-fibrous carbon provided between pieces of silicon carbide or between silicon carbide and a carbon fiber, a proportion and an arrangement of non-fibrous carbon may be changed as appropriate. As shown in Fig. 3, a carbon fiber bundle portion has a width of around several ten µm to several hundred µm in a direction perpendicular to a fiber direction 30. In addition, there may be sections where silicon carbide concentrate to form lumps.

In a SiC-C fiber-shaped structure, carbon fibers constituting a carbon fiber bundle portion and silicon carbide provided between the carbon fibers alternately appear in a direction perpendicular to the fiber direction 30 (a longitudinal direction of the fibers). A single carbon fiber bundle portion in a SiC-C fiber-shaped structure has a width of around 0.2 mm to 4 mm in the direction perpendicular to the fiber direction 30. In addition, a plurality of carbon fiber bundle portions are formed in the sliding portion 131 of the floating ring 130 so that respective fiber directions 30 thereof intersect with each other. An arrangement state of each carbon fiber bundle portion formed in the sliding portion 131 of the floating ring 130 is not particularly limited, and carbon fiber bundle portions with random fiber directions 30 may be dispersed in the sliding portion 131 or a plurality of carbon fiber bundle portions may be formed in a prescribed pattern such as a braided shape. Moreover, the fiber direction 30 of a carbon fiber bundle portion can be recognized from a direction in which streak-shaped silicon carbide or carbon fibers included in a SiC-C fiber-shaped structure extend.

While a content ratio of silicon carbide and carbon (carbon includes both carbon fibers and non-fibrous carbon) in the sliding portion 131 of the floating ring 130 is not particularly limited, favorably, silicon carbide is present in the sliding portion 131 at a ratio of 35% or higher and lower than 85%. Setting an abundance ratio of silicon carbide to 35% or higher enables leakage of the sealed fluid from the sliding portion 131 to be effectively reduced and setting the abundance ratio of silicon carbide to lower than 85% enables lubricity of the sliding portion 131 to be effectively improved. Moreover, it is difficult to set the abundance ratio of silicon carbide to 85% or higher using efficient manufacturing methods.

In addition, favorably, an arithmetic average roughness Ra (JIS B 0601: 2001) of the sliding portion 131 (the (sliding surface 131a) of the floating ring 130 is 0.01 µm or more and less than 1 µm. Setting the arithmetic average roughness Ra of the sliding portion 131 to 0.01 µm or more enables lubricity of the sliding portion 131 to be effectively improved and setting the arithmetic average roughness Ra of the sliding portion 131 to less than 1 µm enables leakage of the sealed fluid to be prevented while maintaining lubricity of the sliding portion 131. Furthermore, favorably, skewness Psk (JIS B 0601: 2001) of the sliding portion 131 is in a negative range. Setting skewness Psk in a negative range enables a problem in which a peak of a protruding portion formed in the sliding portion 131 damages other opposing members when sealing a fluid to be prevented.

Favorably, carbon fibers present in the sliding portion 131 are formed so that fiber directions 30 conform to a planar direction of the sliding portion 131. Accordingly, sliding movement is enabled without damaging a surface of the counterpart (the sliding surface 111a of the rotating ring 110) with ends of the carbon fibers and a leakage pathway is prevented from being formed in a sealed sliding ring, thereby reducing the likelihood of fluid leakage. Moreover, in addition to silicon carbide and carbon, the sliding portion 131 may include silicon portions (observed as lumps whiter than silicon carbide portions inside the silicon carbide portions) which are constituted by silicon (Si).

While a manufacturing method of the sliding portion 131 of the floating ring 130 will be described below, methods of manufacturing the sliding portion 131 of the floating ring 130 are not limited to the manufacturing method described below.

First, carbon fibers to be used as a raw material are prepared. Although the prepared carbon fibers are not particularly limited, for example, PAN-based carbon fibers or pitch-based carbon fibers with a length of 1 mm to 10 mm and a thickness of 5 µm to 50 µm can be used. In addition, favorably, the carbon fibers are arranged so that longitudinal directions thereof are perpendicular to the axial direction and the carbon fibers are randomly arranged over an entire surface of the sliding surface 131a of the floating ring 130.

In this case, favorably, 80% or more of the carbon fibers appearing in the sliding portion 131 are arranged so that longitudinal directions thereof are perpendicular to the axial direction (parallel to the sliding surface 111a of the rotating ring 110) and are arranged over the entire sliding portion 131. Depending on a manufacturing process, carbon fibers that cannot be arranged so that longitudinal directions thereof are perpendicular to the axial direction may be included. Moreover, a material in which such carbon fibers are organized in a sheet form may also be used.

In addition, after converting a part of base carbon into SiC by firing at around 1400°C to 1800°C, a surface is polished as necessary to obtain the sliding portion 131. While the entire floating ring 130 need not be uniformly converted into SiC, in order to discourage the formation of leakage pathways, favorably, a part of the manufactured sliding portion 131 of the floating ring 130 is converted into SiC to at least a depth of 1 mm from the sliding surface 131a that comes into contact with the sliding portion 111 of the rotating ring 110 in the sliding portion 131.

Hereinafter, while the present invention will be described in further detail by presenting practical examples, the present invention is by no means limited to these practical examples.

In the practical examples, a leakage test was performed by preparing samples 1 to 7 representing sliding portions 131 with different area ratios of silicon carbide as shown in Table 1 and applying the samples 1 to 7 to the floating ring 130 provided in the mechanical seal 100.

**[Table 1]**

| | SAMPLE 1 | SAMPLE 2 | SAMPLE 3 | SAMPLE 4 | SAMPLE 5 | SAMPLE 6 | SAMPLE 7 |
|---|---|---|---|---|---|---|---|
| RATIO OF SiC-CONVERTED AREA % | 23.4 | 30.7 | 38.6 | 50.7 | 55.5 | 60.6 | 78.7 |
| PV (MPAG x m/s) | 8 | 8 | 8 | 8 | 8 | 8 | 8 |
| TEMPERATURE | R.T. | R.T. | R.T. | R.T. | R.T. | R.T. | R.T. |
| MATERIAL OF COUNTERPART | SiC | SiC | SiC | SiC | SiC | SiC | SiC |
| SURFACE ROUGHNESS (*µ*m) | 0.2< | <0.1 | <0.1 | <0.1 | <0.1 | <0.1 | <0.1 |
| LEAKAGE | × | × | ○ | ○ | ○ | ○ | ○ |

The samples 1 to 7 were manufactured by preparing carbon fibers formed in a sheet form, hardening the sheet-form carbon fibers with a binder resin and laminating the hardened carbon fibers, impregnating the laminated carbon fibers with molten Si at around 1600°C, firing the impregnated carbon fibers, and polishing a surface of the fired carbon fibers. For the samples 1 to 7, abundance ratios of silicon carbide in the sliding portion 131 were varied by adjusting conditions for the conversion into SiC. The manufactured samples 1 to 7 were subjected to image analysis of a micrograph of the sliding portion 131 using a laser microscope and an abundance ratio of silicon carbide in the sliding portion 131 was measured using image processing software (refer to Table 1) .

In addition, a leakage test of the floating ring 130 including the sliding portions 131 using the samples 1 to 7 was conducted using an actual testing machine. The leakage test was conducted under conditions including using water as a sealed fluid, setting a PV value set to 8 MPaG·m/s, setting temperature to room temperature, and using a same material as a material of the counterpart. In this case, a PV value refers to a product of fluid pressure P (MPaG) due to the sealed fluid which applies on the sliding portion 131 and a velocity V (m/s) of the sliding portion 111 of the rotating ring 110 which slides on the sliding portion 131. Evaluation results are shown in Table 1. Moreover, in the leakage test fields in Table 1, a leakage amount of less than 3 ml/hr was determined as "O: acceptable" and a leakage amount of 3 ml/hr or more was determined as "x: unacceptable". Furthermore, roughness of the sliding portion 131 using each sample was also measured prior to the leakage test.

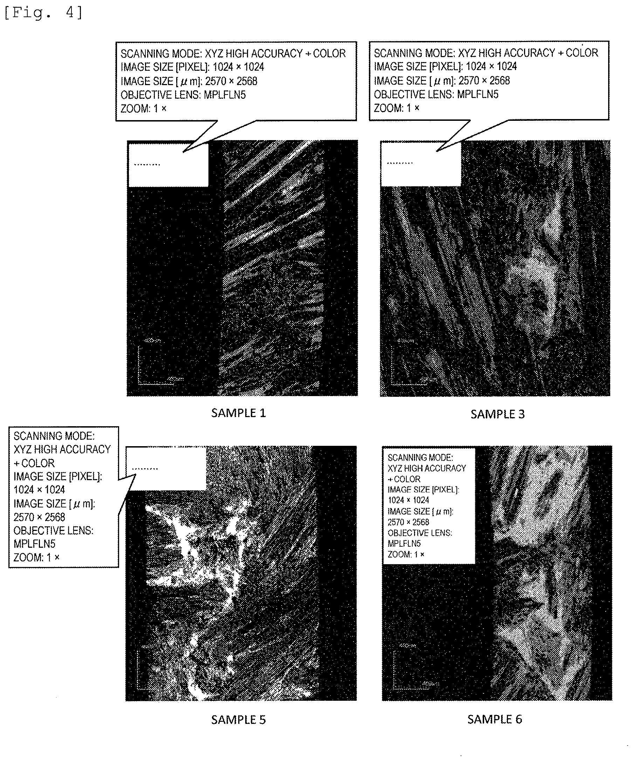

As shown in Fig. 4, formation of SiC-C fiber-shaped structures including a large number of carbon fiber bundle portions with mutually intersecting fiber directions 30 was confirmed in the sliding portions 131 using the samples 1 to 7. The floating rings 130 according to the samples 1 to 7 suppress leakage of the sealed fluid from the sliding portion 131 in a preferable manner while complementing the problem of low self-lubricating property of silicon carbide. As shown in Table 1, the samples 3 to 7 in which silicon carbide was present at a ratio of 35% or higher and lower than 85% were particularly capable of effectively reducing leakage of the sealed fluid from the sliding portion 131. Moreover, even the samples 1 and 2 in which leakage occurred at the conditions described above can be caused to appropriately function as mechanical seals by changing applicable conditions such as reducing a PV value.

Furthermore, advantages gained by using the materials described above in the sliding portion 131 of the floating ring 130 will be explained. As a rough guide of a PV value of a high load-resistant seal, a mechanical seal used in a boiler feed pump requires a PV value of 300 MPaG·m/s or higher.

An intensive study carried out by the present inventors revealed that, while a configuration in which hard SiC materials slide against each other had an upper limit of 80 MPaG·m/s, configurations using the carbon fiber-reinforced composite SiC (CMC) material according to the present Example in the sliding portion 131 can be used at 300 MPaG·m/s or higher. Moreover, portions that slide against each other may be a combination of CMC and SiC or may be both CMC. In addition, since CMC is a non-brittle material with a high fracture toughness, CMC is not susceptible to brittle fracture as in the case of SiC, and since CMC is also resistant to heat and shock, CMC can be described a material well-suited for conditions including high temperature and high-speed rotation.

As described above, since a SiC-C fiber-shaped structure including carbon fibers that form carbon fiber bundle portions and silicon carbide that is provided between the carbon fibers is formed in the sliding portion 131 of the floating ring 130 according to the present Example, the sliding portion 131 has favorable seal characteristics and lubricity while preserving the properties of silicon carbide of hardness and low abrasion. A SiC-C fiber-shaped structure has a structure in which silicon carbide and carbon fibers are finely interlaced, and such a SiC-C fiber-shaped structure conceivably imparts slidability to the sliding portion 131 by any of the following factors or a combination of a plurality of the following factors. For example, lubricity is imparted due to gaps being formed between carbon fibers arranged adjacent to each other and the gaps functioning as fluid reservoirs. In addition, the carbon fibers themselves function as lubricating materials. Furthermore, since a lapping process makes hardness of the carbon fibers themselves or hardness of the silicon carbide inside the carbon fiber bundle portion higher than hardness of non-fibrous carbon, slidability is imparted as the non-fibrous carbon between the carbon fibers constitutes a depressed portion that is depressed with respect to the carbon fiber bundle portion and functions as a fluid reservoir. Moreover, slidability is imparted as carbon constituting a non-fibrous carbon portion performs the function of a solid-state lubricating agent.

In addition, due to longitudinal directions of the fibers in the carbon fiber bundle portion being randomly oriented for each carbon fiber portion, slidability may be imparted since a leakage pathway is less likely to be formed in the sliding portion 131 and, at the same time, a fluid can be retained in the sliding portion 131. Furthermore, since a SiC-C fibrous structure formed by converting a part of a carbon fiber such as a surface of the carbon fiber into SiC provides favorable bondability between the carbon fiber and silicon carbide, a problem of an occurrence of cracking, chipping, or the like in the sliding portion 131 can be prevented in a preferable manner. Moreover, since silicon carbide in a SiC-C fibrous structure has high strength, favorable abrasion resistance can be imparted to the sliding portion 131 of the floating ring 130 and gaps can be prevented from being present in an excessive number in the sliding portion 131. As described above, the floating ring 130 that achieves both lubricity of the sliding portion 131 and prevention of leakage of the sealed fluid from the sliding portion 131 can be used particularly favorably even under high-temperature, high-pressure, and high-speed conditions which cannot be sufficiently accommodated by conventional floating rings 130.

In addition, in the present Example, since carbon fibers are included as a bundle, the sliding portion 131 of the floating ring 130 elastically deforms and, as a result, a contact area with the sliding surface 111a of the rotating ring 110 increases to lower local surface pressure and suppress burnout. Furthermore, when the floating ring 130 rotates under the influence of fluid pressure, although an apparent contact area does not change, elastic deformation of the carbon fibers increase an actual contact area to lower local surface pressure and suppress burnout.

Moreover, while the other sliding member which is used paired with the floating ring 130 (in the present Example, the rotating ring 110) may be a member having a composition or a structure that differs from that of the sliding portion 131 of the floating ring 130 such as a member including metal or a member only including carbon or silicon carbide, slidability can be further improved and a mechanical seal with a high sealing performance can be provided by adopting a member having a similar composition or a similar structure to the sliding portion 131 of the floating ring 130 according to the present Example.

### [REFERENCE SIGNS LIST]

- 100: Mechanical seal
- 110: Rotating ring
- 111: Sliding portion
- 111a: Sliding surface
- 120: Stationary ring
- 120a: Pressing surface
- 130: Floating ring
- 131: Sliding portion
- 131a: Sliding surface
- 132: Pressed portion
- 140: Sleeve
- 141: Cylindrical portion
- 142: Holding portion
- 150: Spring
- 200: Rotating shaft
- 300: Housing
- 301: Pin

## Claims

1. A mechanical seal that seals an annular gap between a rotating shaft and a housing, the mechanical seal comprising:
a rotating ring which rotates with the rotating shaft;
a stationary ring which is fixed to the housing; and
a floating ring which is provided between the rotating ring and the stationary ring in an axial direction of the rotating shaft and which has a sliding portion that slides on the rotating ring,
wherein the mechanical seal seals a sealed fluid via the sliding portion, and
the sliding portion has a plurality of carbon fibers and silicon carbide provided between the plurality of carbon fibers.

2. The mechanical seal according to claim 1, wherein a carbon fiber bundle portion that is an assembly in which longitudinal directions of a plurality of carbon fibers are oriented in a substantially same direction is formed, and silicon carbide is formed between the carbon fibers included in the carbon fiber bundle portion.

3. The mechanical seal according to claim 2 further comprising:
non-fibrous carbon provided between one carbon fiber bundle portion and another carbon fiber bundle portion adjacent thereto.

4. The mechanical seal according to claim 2 or 3, wherein the plurality of carbon fiber bundle portions formed in the sliding portion are randomly oriented.

5. The mechanical seal according to any one of claims 1 to 4, wherein silicon carbide is present at a ratio of 35% or higher and lower than 85% in the sliding portion.

6. The mechanical seal according to any one of claims 1 to 5, wherein a portion, which slides on the sliding portion of the floating ring, in the rotating ring includes a plurality of carbon fibers and silicon carbide provided between the plurality of carbon fibers.

7. A floating ring used in a mechanical seal that seals an annular gap between a rotating shaft and a housing, the floating ring being provided between a rotating ring which rotates with the rotating shaft and a stationary ring which is fixed to the housing in an axial direction of the rotating shaft and having a sliding portion that slides on the rotating ring,
wherein the floating ring seals a sealed fluid via the sliding portion, and
the sliding portion has a plurality of carbon fibers and silicon carbide provided between the plurality of carbon fibers.
